# EUROPÄISCHE PATENTANMELDUNG

(11) **EP 4 033 753 A1**
(43) Veröffentlichungstag der Anmeldung: **27.07.2022**
(21) Anmeldenummer: 22152013.3
(22) Anmeldetag: 18.01.2022
(51) Int. Cl.: H04N 7/15, H04L 12/18

(54) **VIDEOKONFERENZSYSTEM UND ZUGEHÖRIGES COMPUTERPROGRAMMPRODUKT**

(30) Priorität: 26.01.2021 DE 102021101645
(71) Anmelder: alfaview Video Conferencing Systems GmbH & Co. KG, 76133 Karlsruhe (DE)
(72) Erfinder: Fostiropoulos, Nikolaos, 76139 Karlsruhe (DE)
(74) Vertreter: Lemcke, Brommer & Partner Patentanwälte Partnerschaft mbB

(57) **Zusammenfassung**

Vorgeschlagen wird ein Videokonferenzsystem zum bidirektionalen Übertragen von Video- und Audiosignalen zwischen mehreren Endpunkt-Rechnern (EP1-EP3, EPn), die jeweils eine Sendeeinrichtung und/oder Empfangseinrichtung (SE) für Audio/Videoströme aufweisen, über ein Computernetz (CN) mit:
jeweils einen Konferenz-Client (KC) auf dem betreffenden Endpunkt-Rechner (EP1-EP3);
wenigstens einen Konferenz-Server (KS), um die Audio/Videoströme von den Endpunkt-Rechnern (EP1-EP3, EPn) zu empfangen, zu verarbeiten und zurückzusenden;
bei dem der Konferenz-Server (KS) dazu ausgebildet ist, für die Endpunkt-Rechner (EP1-EP3, EPn) und/oder einen zugehörigen Benutzer (B1-Bn) wenigstens einen virtuellen Raum (KR) zur Verfügung zu stellen, der für die Endpunkt-Rechner (EP1-EP3, EPn) und/oder einen zugehörigen Benutzer (B1-Bn) in Abhängigkeit von einer vorgegebenen Berechtigungseinstufung des Endpunkt-Rechners (EP1-EP3, EPn) und/oder des zugehörigen Benutzers (B1-Bn) zugänglich ist, wobei in dem Raum (KR) anwesende Endpunkt-Rechner (EP1, EP3) und/oder Benutzer (B1, B3) über den Konferenz-Server (KS) mit den anderen zeitgleich in dem Raum (KR) anwesenden Endpunkt-Rechner (EP1, EP3) und/oder Benutzer (B1, B3) in Verbindung stehen;
bei dem der jeweilige Konferenz-Client (KC) dazu ausgebildet ist, den wenigstens einen Raum (KR) anzuzeigen und dem Endpunkt-Rechner (EP1-EP3, EPn) und/oder Benutzer (B1-Bn) sein Betreten in Abhängigkeit von der Berechtigungseinstufung zu ermöglichen.

## Beschreibung

Die Erfindung betrifft ein Videokonferenzsystem gemäß Anspruch 1 sowie ein zugehöriges Computerprogrammprodukt gemäß Anspruch 17.

Videokonferenzsysteme sind als solche hinreichend bekannt. Sie dienen zum bidirektionalen Übertragen von Video- und Audiosignalen zwischen mehreren Endpunkten oder Endpunkt-Rechnern, die jeweils eine Sendeeinrichtung und/oder eine Empfangseinrichtung für Audioströme und/oder für Videoströme aufweisen, über ein Computernetz, insbesondere das Internet oder ein firmeneigenes Intranet. Videokonferenzsysteme umfassen regelmäßig jeweils einen Konferenz-Client, der auf dem betreffenden Endpunkt-Rechner installiert und ausführbar ist, sowie wenigstens einen Konferenz-Server, der dazu ausgebildet ist, die Audio- und/oder Videoströme von den Endpunkt-Rechnern zu empfangen, zu verarbeiten und an die Endpunkt-Rechner zurückzusenden bzw. zu verteilen.

Videokonferenzen finden allgemein in zeitlich nur begrenzt existierenden virtuellen Konferenzräumen statt. Diese Konferenzräume (nachfolgend kurz auch als "Räume" bezeichnet) werden meist nur für den Zweck eines einzigen Meetings durch entsprechende Definition auf dem Konferenz-Server erstellt und danach wieder gelöscht.

Insbesondere im Rahmen der gegenwärtigen Gesundheitskrise und der dadurch bedingt favorisierten Telearbeit hat sich gezeigt, dass eine derartige Organisation von Videokonferenzen bzw. Videokonferenzsystemen den Anforderungen an eine entfernte Zusammenarbeit zwischen Benutzern nur zum Teil gerecht wird. Insbesondere sind bestehende Videokonferenzsysteme oft nur wenig flexibel einsetzbar, da die Definition von Konferenzräumen für Meetings wenigen Benutzern möglich oder geläufig ist, was die praktische Durchführung der Zusammenarbeit erschwert.

Der Erfindung liegt die Aufgabe zugrunde, ein Videokonferenzsystem der genannten Art dahingehend weiterzuentwickeln, dass eine verbesserte und flexiblere Zusammenarbeit zwischen örtlich voneinander entfernten Benutzern ermöglicht wird.

Männliche und weibliche Formen von Begriffen wie "Teilnehmer" oder "Benutzer" werden vorstehend und nachfolgend gleichberechtigt verwendet. Es sollen immer beide Formen mit umfasst sein - auch wenn nicht explizit angegeben.

Die genannte Aufgabe wird erfindungsgemäß gelöst durch ein Videokonferenzsystem mit den Merkmalen des Anspruchs 1 sowie durch ein zugehöriges Computerprogrammprodukt mit den Merkmalen des Anspruchs 17.

Die Anmelderin verfolgt auf der Grundlage der vorliegenden Erfindung einen anderen Ansatz, als er von herkömmlichen Videokonferenzsystemen bekannt ist. Konferenzräume sind im Rahmen der hier beschriebenen Erfindung dauerhaft verfügbar und können mehrfach bzw. immer wieder verwendet werden. Die genannten Räume fungieren somit als virtuelle Büros, die nicht nur zum Zweck eines einzelnen Meetings bzw. einer einzelnen Videokonferenz erstellt werden, sondern um dauerhaft mit einem verteilten Team zusammenzuarbeiten. Auf diese Weise lässt sich die Einsetzbarkeit des Videokonferenzsystems stark erweitern. Auch weniger versierte Benutzer können auf die dauerhaft bestehenden Räume zugreifen, um flexibel in Gruppen oder Untergruppen zusammenzuarbeiten - wie das auch in einem physikalischen Gebäude möglich wäre.

Ein erfindungsgemäßes Videokonferenzsystem ist deshalb ausgebildet zum bidirektionalen Übertragen von Video- und Audiosignalen zwischen mehreren Endpunkt-Rechnern, die jeweils eine Sendeeinrichtung und/oder eine Empfangseinrichtung für Audioströme und/oder für Videoströme aufweisen, über ein Computernetz, insbesondere das Internet oder ein Intranet. In der Regel weisen die Endpunkt-Rechner jeweils sowohl eine Sendeeinrichtung als auch eine Empfangseinrichtung für Audioströme und für Videoströme auf. Das erfindungsgemäße Videokonferenzsystem umfasst jeweils einen Konferenz-Client, der auf dem betreffenden Endpunkt-Rechner installiert und ausführbar ist, sowie wenigstens einen Konferenz-Server, der dazu ausgebildet ist, die Audio- und/oder Videoströme von den Endpunkt-Rechnern zu empfangen, zu verarbeiten und an die Endpunkt-Rechner zurückzusenden. Erfindungsgemäß ist der Konferenz-Server weiterhin dazu ausgebildet, für die Endpunkt-Rechner und/oder einen zugehörigen Benutzer wenigstens einen dauerhaft verfügbaren virtuellen Raum zur Verfügung zu stellen, der für die Endpunkt-Rechner und/oder einen zugehörigen Benutzer in Abhängigkeit von einer vorgegebenen Berechtigungseinstufung (Zugangsberechtigung) des Endpunkt-Rechners und/oder des zugehörigen Benutzers zugänglich ist, wobei in dem Raum anwesende Endpunkt-Rechner und/oder Benutzer über den Konferenz-Server mit den anderen zeitgleich in dem Raum anwesenden Endpunkt-Rechner und/oder Benutzer in Verbindung stehen. Weiterhin ist der jeweilige Konferenz-Client dazu ausgebildet, den wenigstens einen Raum anzuzeigen und dem Endpunkt-Rechner und/oder Benutzer sein Betreten in Abhängigkeit von der Berechtigungseinstufung zu ermöglichen.

Bei den jeweiligen Endpunkt-Rechnern handelt es sich um Maschinen (Computer), die von einem zugehörigen Benutzer, d. h. einer realen Person bedient werden. In der Regel meldet sich diese Person, d. h. der Benutzer auf dem Endpunkt-Rechner bei dem Videokonferenzsystem an, um entsprechenden Zugang zu dem Videokonferenzsystem zu erhalten. Im Folgenden werden die Begriffe "Endpunkt-Rechner" und "Benutzer" deshalb in der Regel synonym verwendet.

Der Begriff "dauerhaft" bedeutet im Rahmen der vorliegenden Beschreibung, dass ein auf dem Konferenz-Server definierter virtueller Raum (Konferenzraum) nicht nur zur einmaligen Verwendung existiert, sondern mehrmals, insbesondere zeitlich unbegrenzt, zur Verfügung steht, wie weiter oben bereits angedeutet.

Bei den genannten Räumen handelt es sich nicht um real existierende, physikalische Räume, sondern um virtuelle Räume, die nur auf dem Konferenz-Server existieren und einen Austausch von Audio-/Videoströmen (Datenströmen) ermöglichen, die von verschiedenen Endpunkt-Rechnern stammen.

In der Regel verfügen die genannten Benutzer bzw. Teilnehmer an dem Videokonferenzsystem jeweils über ein Benutzerkonto, sodass sie dem Konferenz-Server bekannt und durch diesen authentifizierbar sind. Außerdem verfügen die genannten Benutzer bzw. Teilnehmer über eine Berechtigungseinstufung (Zugangsberechtigung), welche festlegt, ob ein betreffender Benutzer oder Teilnehmer an dem Videokonferenzsystem teilhaben und einen bestimmten virtuellen Raum betreten darf oder nicht. Solche Berechtigungseinstufungen können insbesondere durch einen Administrator des Videokonferenzsystems vergeben und verändert werden.

Wenn vorliegend davon die Rede ist, dass "in einem Raum anwesende Endpunkt-Rechner und/oder Benutzer in Verbindung stehen", so ist damit gemeint, dass sich die genannten Benutzer mit ihren Endpunkt-Rechnern zeitgleich in einem (Konferenz-)Raum angemeldet haben, sodass sie jeweils wechselseitig die von ihnen erzeugten Audio- und/oder Videoströme empfangen.

Die Anzeige des Raums durch den Konferenz-Client erfolgt in aller Regel über ein Display bzw. eine Anzeigeeinrichtung des betreffenden Endpunkt-Rechners. Das Betreten eines Raumes durch einen Benutzer kann durch Betätigen einer hierfür vorgesehenen Schaltfläche oder durch einen anderen Bedienvorgang an dem Konferenz-Client bewirkt werden.

Die Endpunkt-Rechner sind bauarttechnisch nicht beschränkt; es kann sich um Desktop-PCs, Smartphones, Tablet-PCs oder vergleichbare Geräte handeln.

Eine erste Weiterbildung des erfindungsgemäßen Videokonferenzsystems sieht vor, dass innerhalb eines Kundenkontos eine Mehrzahl von Räumen definierbar und vorzugsweise in einer mehrdimensionalen Raumstruktur anordenbar sind. Auf diese Weise können innerhalb eines jeden Kundenkontos innerhalb des Videokonferenzsystems Räume individuell in einer mehrdimensionalen Struktur angeordnet werden, um beispielsweise eine Organisationsstruktur oder eine (real existierende) Gebäudestruktur abzubilden.

Der Begriff "Kunde" bezeichnet hier und im Folgenden einen (übergeordneten) Nutzer des Videokonferenzsystems, also z. B. eine Behörde, eine Bildungseinrichtung oder ein Unternehmen, welcher Nutzer anschließend (untergeordneten) Benutzern oder Teilnehmern (d. h. in der Regel real existierenden Personen, z. B. Mitarbeitern oder Studierenden) die Nutzung des Videokonferenzsystems ermöglicht, indem er den Benutzern entsprechende Benutzerkonten (siehe oben) einrichtet. Ein Kunde verfügt über ein entsprechendes Kundenkonto.

Eine andere Weiterbildung des erfindungsgemäßen Videokonferenzsystems sieht vor, dass in Abhängigkeit von seiner Berechtigungseinstufung Teile der Raumstruktur für einen gegebenen Benutzer einsehbar oder verborgen sind. Je nach Berechtigung sind also nur Teile der Struktur für Benutzer einsehbar oder verborgen. So kann beispielsweise die Personalverwaltung einer Firma einen Raum belegen, der für alle Benutzer zugänglich ist, während die Räume der Geschäftsführung nur für bestimmte Benutzer freigegeben sind.

Je nach Anforderung kann die Gestaltung der Raumstruktur innerhalb eines Kundenkontos unterschiedlich aussehen. Ein kleines Unternehmen benötigt u. U. nur wenige Räume, die einfach linear untereinander aufgelistet werden können. Eine Universität kann hingegen eine weit verzweigte Struktur anlegen, um z. B. Fachbereiche oder zentrale Einrichtungen abzubilden. Entsprechend sieht eine wieder andere Weiterbildung des erfindungsgemäßen Videokonferenzsystems vor, dass eine Gestaltung der Raumstruktur je nach Art des Kunden oder Kundenkontos unterschiedlich ist, insbesondere linear untereinander aufgelistet oder als verzweigte Struktur.

Es wird vorteilhafterweise unterschieden zwischen Abteilungen und Räumen, wobei Abteilungen als Strukturelemente anzusehen sind, welche wiederum weitere Abteilungen und Räume enthalten können. Eine entsprechende Weiterbildung des erfindungsgemäßen Videokonferenzsystems sieht vor, dass neben Räumen noch Abteilungen definiert oder definierbar sind, welche Abteilungen Strukturelemente darstellen, welche wiederum weitere Abteilungen und/oder Räume enthalten können.

Um dem Benutzer die Bedienung des erfindungsgemäßen Videokonferenzsystems zu erleichtern, kann bei entsprechender Weiterbildung desselben insbesondere vorgesehen sein, dass Räume und/oder Abteilungen über eine webbasierte Administrationsoberfläche erstellbar und vorzugsweise per Drag & Drop in einer beliebigen Struktur anordenbar sind.

Im Zuge wieder einer anderen Weiterbildung des erfindungsgemäßen Videokonferenzsystems kann noch vorgesehen sein, dass Räume und/oder Abteilungen gesammelt oder einzeln konfigurierbar sind, um Benutzern oder Gruppen von Benutzern jeweils eine Zutrittsberechtigung und eine Berechtigungseinstufung zuzuweisen. Auf diese Weise lässt sich die Nutzbarkeit des erfindungsgemäßen Videokonferenzsystems individualisiert ausgestalten. Beispielsweise können alle Benutzer Zugang zu allen Räumen einer bestimmten Abteilung erhalten; oder es kann für jeden Raum (einer Abteilung) separat geregelt werden, welcher Benutzer Zutritt hat und welcher nicht.

Um einen umfassenden Überblick über die Arbeitsmöglichkeiten innerhalb des erfindungsgemäßen Videokonferenzsystems zu erhalten, sehen angemeldete Benutzer innerhalb des Konferenz-Clients vorzugsweise eine grafische Darstellung der Raumstruktur. Dabei können Abteilungen und deren untergeordnete Struktur zur besseren Übersicht in der Anzeige "eingeklappt" oder ausgeblendet sein. Eine entsprechende Weiterbildung des erfindungsgemäßen Videokonferenzsystems sieht deshalb vor, dass der Konferenz-Client dazu ausgebildet ist, am Konferenz-Server angemeldeten Benutzern eine (grafische) Darstellung der Raumstruktur anzuzeigen. Vorteilhafterweise kann im Rahmen einer entsprechenden Weiterbildung des erfindungsgemäßen Videokonferenzsystems auch vorgesehen sein, dass Abteilungen und optional deren untergeordnete Raumstruktur/en in der Darstellung mittels des Konferenz-Clients ein- und ausblendbar sind. Die Darstellung des Videokonferenzsystems wird dadurch einfacher und ist für den Benutzer besser zu überblicken.

Räume können mittels einer "Betreten"-Schaltfläche oder durch einen anderen Auswahlvorgang durch den Benutzer ausgewählt und betreten werden. Damit können sich die Benutzer intuitiv in der Raumstruktur bewegen, sofern die jeweilige Zugangsberechtigung vergeben wurde. Eine entsprechende Weiterbildung des erfindungsgemäßen Videokonferenzsystems sieht deshalb vor, dass Räume mittels einer zugeordneten Bedien-Schaltfläche des Konferenz-Clients betretbar sind, sofern ein betreffender Benutzer über die jeweilige Berechtigungseinstufung für den Zugang verfügt. Falls keine Berechtigungseinstufung für das Betreten eines Raumes vorliegt, kann die Schaltfläche ausgeblendet oder inaktiv geschaltet sein.

Beim Betreten eines Raumes werden vorzugsweise die Audio- und Videoströme aller sich darin aufhaltenden Benutzer miteinander verbunden, sodass sich alle betreffenden Benutzer untereinander hören und sehen können. Beim Verlassen des Raumes werden die Audio- und Videoströme entsprechend wieder getrennt (durch den Konferenz-Server). Zu diesem Zweck kann ein erfindungsgemäßes Videokonferenzsystem dazu ausgebildet sein, die Audio- und Videoströme aller betreffenden Benutzer beim Betreten eines Raumes durch die Benutzer miteinander zu verbinden und beim Verlassen des Raumes durch die Benutzer wieder zu trennen, insbesondere auch sukzessive für einzelne Benutzer. Dies bedeutet, dass weitere Benutzer einen Raum auch zu einem späteren Zeitpunkt betreten können, um dann mit allen bereits anwesenden Benutzern entsprechend verbunden zu werden. Umgekehrt kann jeder Benutzer den Raum jederzeit (früher) wieder verlassen, worauf hin seine Audio- und Videoströme von den Audio- und Videoströmen der anderen, im Raum verbleibenden Benutzer getrennt werden.

Vorteilhafterweise ist im Rahmen einer wieder anderen Weiterbildung des erfindungsgemäßen Videokonferenzsystems vorgesehen, dass eine Aufenthaltsdauer in einem Raum zeitlich unbegrenzt ist, wobei vorzugsweise das Verlassen eines Raumes durch Schließen des Konferenz-Clients oder durch Betreten eines anderen Raumes bewirkbar ist.

Im Zuge einer besonders vorteilhaften Weiterbildung des erfindungsgemäßen Videokonferenzsystems ist vorgesehen, dass sich ein Benutzer (vorzugsweise unter Verwendung nur eines Benutzerkontos) in mehreren Räumen gleichzeitig aufhält. Dadurch kann gewährleistet werden, dass mehrere Personengruppen gleichzeitig die Audio- und Videoströme des besagten Benutzers sehen. Beispielsweise kann sich ein Professor auf diese Weise sowohl in einem virtuellen Vorlesungsraum 1 als auch sowohl in einem virtuellen Vorlesungsraum 2 aufhalten, um so eine größere Anzahl an Studierenden zu erreichen.

Es hat sich als besonders vorteilhaft herausgestellt, wenn jeder Raum grundsätzlich aus dem Hauptraum und einer beliebigen Anzahl von weiteren Räumen, sogenannten Gruppenräumen besteht. Gruppenräume können zur weiteren Strukturierung verwendet werden oder auch, um ad hoc, d. h. spontan Besprechungen in wechselnden Zusammensetzungen durchzuführen, ohne dabei den eigentlichen Raum zu verlassen. Eine entsprechende Weiterbildung des erfindungsgemäßen Videokonferenzsystems sieht also vor, dass jeder Raum einen Hauptraum und eine beliebige Anzahl von Gruppenräumen umfasst, welche Gruppenräume vorzugsweise zur weiteren Strukturierung und/oder zur Durchführung von adhoc-Konferenzen in wechselnden Zusammensetzungen verwendbar sind, ohne dabei den übergeordneten Raum zu verlassen.

Innerhalb des Konferenz-Clients wird der aktuelle Raum bzw. der Hauptraum mit seinen Untergruppen (Gruppenräume) vorteilhafter Weise übersichtlich in einer Liste dargestellt, wobei zusätzlich diejenigen Benutzer mit dargestellt sind, die sich momentan in dem jeweiligen Raum (Hauptraum oder Gruppenraum) aufhalten, um insbesondere einem Benutzer das gezielte Auswählen eines Raums zu ermöglichen, um dort bestimmte Benutzer zu treffen. Zu diesem Zweck kann eine andere Weiterbildung des erfindungsgemäßen Videokonferenzsystems vorsehen, dass der Konferenz-Client dazu ausgebildet ist, einen aktuellen Raum oder den Hauptraum mit den zugehörigen Gruppenräumen in einer Liste darzustellen, vorzugsweise jeweils zusammen mit der weiter oben genannten Bedien-Schaltfläche, wobei höchst vorzugsweise zusätzlich diejenigen Benutzer und/oder eine Anzahl derjenigen Benutzer darstellbar sind, die sich aktuell in einem bestimmten Hauptraum oder Gruppenraum aufhalten.

Die Kommunikation innerhalb der Raumstruktur stellt einen besonders wichtigen Aspekt von Videokonferenzsystemen dar. Um im Rahmen der vorliegenden Erfindung die Kommunikation auch über Raumgrenzen hinweg sicherzustellen, können im Rahmen einer vorteilhaften Weiterbildung Textnachrichten abgesetzt werden, die je nach Bedarf an die gesamte Raumstruktur bzw. der sich darin aufhaltenden Benutzer verteilt werden. Es können aber auch nur Teile der Raumstruktur als Empfänger einer solchen Textnachricht festgelegt werden, oder auch nur ein Raum, ein Unterraum oder ein einzelner Benutzer adressiert werden. Im Rahmen einer entsprechenden Weiterbildung der Erfindung verfügt das vorgeschlagene Videokonferenzsystem deshalb zusätzlich noch über eine Textnachrichten-Funktion zum Erzeugen von Textnachrichten, welche Textnachrichten an die gesamte Raumstruktur und die sich darin aufhaltenden Benutzer verteilbar sind, wobei vorzugsweise auch nur Teile der Raumstruktur, wenigstens ein Raum, wenigstens ein Gruppenraum und/oder wenigstens ein einzelner Benutzer als Empfänger einer solchen Textnachricht festlegbar ist/sind . Dazu kann weiter vorgesehen sein, dass z.B. über ein Kontextmenü auswählbar ist, an wen die Textnachricht gesendet werden soll (z.B. an eine bestimmte Person, einen Raum oder Unterraum (Hauptraum bzw. Gruppenraum), eine Abteilung oder ein Unternehmen).

Gemäß einem zweiten Aspekt der vorliegenden Erfindung wird die weiter oben definierte Aufgabe auch gelöst durch ein Computerprogrammprodukt mit auf einem physikalischen Datenträger gespeicherten oder speicherbaren Programminformationen, bei deren Ausführung auf einem Computersystem mit einer Anzahl von über Kommunikationskanäle verbundenen oder verbindbaren Endpunkten, die jeweils eine Sendeeinrichtung und/oder eine Empfangseinrichtung für Audioströme und/oder für Videoströme aufweisen, ein erfindungsgemäßes Videokonferenzsystem zum bidirektionalen Übertragen von Video- und Audiosignalen ausgebildet oder ausbildbar ist, wie vorstehend detailliert beschrieben. Dies gilt auch für die detailliert beschriebenen Weiterbildungen des erfindungsgemäßen Videokonferenzsystems.

Weitere Eigenschaften und Vorteile der Erfindung ergeben sich aus der nachfolgenden Beschreibung von Ausführungsbeispielen anhand der Zeichnung.
Figur 1a zeigt schematisch eine Ausgestaltung des Videokonferenzsystems;
Figur 1b zeigt schematisch eine mögliche Verwendung des Videokonferenzsystems gemäß Figur 1a;
Figur 2 zeigt schematisch eine mögliche Darstellung der Raumstruktur;
Figur 3 zeigt schematisch eine alternative Darstellung der Raumstruktur;
Figur 4 zeigt eine andere Darstellung der Raumstruktur zusammen mit zugehörigen Schaltflächen;
Figur 5 zeigt eine zu Figur 4 alternative Darstellung der Raumstruktur; und
Figur 6 zeigt noch eine andere Darstellung der Raumstruktur mit Gruppenräumen und einer Anzeige der sich darin aufhaltenden Benutzer.

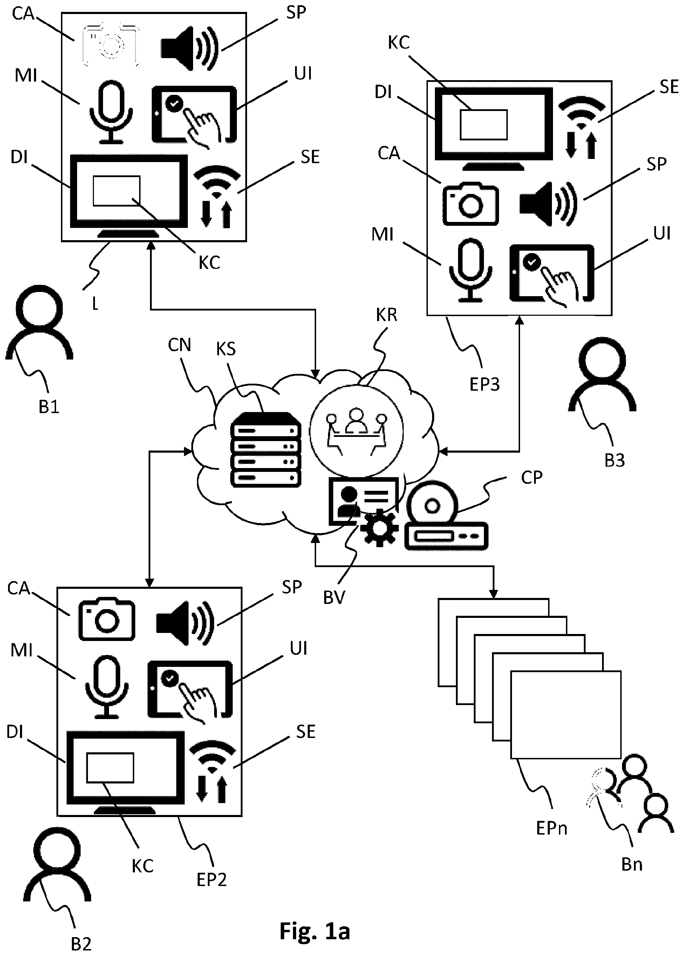

Figur 1a zeigt ein erfindungsgemäßes Videokonferenzsystem mit einer Reihe von Teilnehmern, die an verschiedenen Endpunkten des Videokonferenzsystems angeordnet sind. Grundsätzlich können alle Endpunkte des Videokonferenzsystems technisch gleichwertig ausgestaltet bzw. ausgestattet sein; dies ist in den Figuren entsprechend dargestellt - allerdings beschränkt sich die gezeigte technische Ausstattung der einzelnen Endpunkte bzw. der dort vorhandenen Endpunkt-Rechner nicht auf die exemplarisch gezeigte technische Ausstattung. Insbesondere können an den Endpunkten auch verschiedene Endpunkt-Rechner (PCs, Tablets, Smartphones, ...) zum Einsatz kommen, sofern diese gewisse Mindestanforderungen erfüllen.

Zur technischen Ausgestaltung der einzelnen Endpunkte (oder Endpunkt-Rechner) des Videokonferenzsystems wurde auch weiter oben im allgemeinen Teil der Beschreibung bereits vorgetragen. Die Begriffe "Endpunkte" und "Endpunkt-Rechner" werden nachfolgend synonym verwendet.

Gemäß Figur 1a umfasst das Videokonferenzsystem zunächst einen ersten Endpunkt EP1, der - ohne jede Beschränkung - einem Ausbilder, Präsentator oder allgemein einem (VIP-)Benutzer zugeordnet sein kann. Entsprechend ist ein zweiter Endpunkt EP2 einem zweiten Benutzer B2 und ein dritter Endpunkt EP3 einem dritten Benutzer B3 zugeordnet. Es können weitere Endpunkte EPn existieren, denen entsprechend jeweils wiederum ein Benutzer Bn zugeordnet sein kann. Grundsätzlich ist die Zahl der Endpunkte des Videokonferenzsystems im Rahmen der technischen Möglichkeiten unbeschränkt.

Die genannten Endpunkte EP1 - EPn sind über ein Computernetz CN miteinander verbunden. Vorzugsweise handelt es sich bei dem Computernetz CN um das weltweite Internet oder über ein firmeninternes Intranet. Grundsätzlich ist die Erfindung jedoch nicht auf eine bestimmte Art von Computernetz CN beschränkt.

Die Kommunikation der Endpunkte EP1 - EPn in dem Computernetz CN erfolgt nach Maßgabe eines Konferenz-Servers KS, der Hardware- und Software-technisch entsprechend ausgerüstet ist. Insbesondere kann der Konferenz-Server KS über eine sogenannte Multipoint Control Unit, kurz MCU, verfügen, wobei es sich um einen zentralen Sternverteiler für Videokonferenzen handelt. Eine MCU kann in Hard- oder Software realisiert sein und ist dem Fachmann als solche bekannt. Über eine MCU werden die Datenströme von mehreren Konferenzteilnehmern (Benutzern) empfangen, je nach Konfiguration der MCU verarbeitet und an die Teilnehmer zurückgesendet.

Der Konferenz-Server KS bzw. das Videokonferenzsystem insgesamt verfügt über eine (softwaretechnisch eingerichtete) Benutzerverwaltung BV, um Benutzerkonten der einzelnen Benutzer zu führen, welchen insbesondere auch die Zugangsberechtigungen der einzelnen Benutzer zu dem Videokonferenzsystem insgesamt bzw. der weiter oben angesprochenen Raumstruktur festgehalten sind. Die Benutzer melden sich in ihrem jeweiligen Benutzerkonto auf dem Konferenz-Server KS an und verfügen dann über vorher festgelegte Rechte betreffend die Benutzung des Videokonferenzsystems. Hierauf wird weiter unten noch genauer eingegangen.

Auf dem Konferenz-Server KS ist weiterhin wenigstens ein dauerhaft eingerichteter virtueller Konferenzraum KR definiert, auf den die Benutzer - bei entsprechender Zugangsberechtigung - jederzeit zugreifen können, um sich mit weiteren Benutzern des Videokonferenzsystems zu treffen. In der Regel werden auf dem Konferenz-Server KS mehrere solche dauerhaft eingerichtete virtuelle Konferenzräume KR definiert sein, worauf unten ebenfalls noch genauer eingegangen wird.

Die einzelnen Endpunkte EP1 - EPn sind in der Lage, über das Computernetz CN Datenströme auszutauschen, im Rahmen der vorliegenden Erfindung vorzugsweise Audioströme (Ton) und Videoströme (Bild). Um solche Datenströme erzeugen zu können, verfügen alle Endpunkte (EP1 - EPn) über eine Kamera CA und ein Mikrofon MI. Des Weiteren verfügen alle Endpunkte EP1 - EPn über Sende- und Empfangseinrichtungen für die genannten Datenströme, was in Figur 1a bei Bezugszeichen SE symbolisiert ist. Diese können, müssen aber nicht drahtlos ausgebildet sein. Alle Endpunkte verfügen gemäß der Ausgestaltung in Figur 1a außerdem über geeignete Ausgabe-/Wiedergabeeinrichtungen für empfangene Datenströme, hier dargestellt in Form eines Displays DI für empfangene Videoströme und eines Lautsprechers SP für empfangene Audioströme. Des Weiteren verfügen die Endpunkte EP1 - EPn jeweils über eine Benutzerschnittstelle UI, die als grafische Benutzerschnittstelle (GUI) ausgebildet sein kann, wie dies insbesondere in Figur 1a symbolisiert ist. Die Benutzerschnittstelle UI kann Teil des Displays DI sein, oder es kann sich dabei um eine andere Eingabemöglichkeit, wie eine Tastatur, eine Maus oder dergleichen, handeln. Auf jedem Endpunkt-Rechner wird vorliegend ein Konferenz-Client, d. h. eine entsprechende Client-Software zur Teilnahme an dem Videokonferenzsystem ausgeführt. Dies ist in Figur 1a jeweils durch ein Rechteck KC auf dem Display DI symbolisiert.

Bei Bezugszeichen CP ist ein Datenträger und ein entsprechendes Lesegerät dargestellt, was verdeutlichen soll, dass entsprechende Programmanweisungen (Pro¬grammcode), die/der zum Einrichten des Videokonferenzsystems und seiner Komponenten bzw. zum Ausführen eines erfindungsgemäßen Verfahrens mithilfe des gezeigten Videokonferenzsystems benötigt wird/werden, auf einem entsprechenden Datenträger gespeichert oder speicherbar sein können, um das Videokonferenzsystem einschließlich der Clients (Endpunkt-Rechner) entsprechend auszustatten (aufzusetzen). Es ist jedoch grundsätzlich nicht erforderlich, dass die genannten Programmanweisungen auf einem physikalischen Datenträger vorliegen; alternativ oder zusätzlich kommt auch ein Download in entsprechend körperloser Form in Betracht, z. B. aus dem Internet.

Es wurde bereits darauf hingewiesen, dass es sich bei Benutzer B1 um einen Ausbilder oder Präsentator handeln kann. Im Rahmen eines bevorzugten Anwendungsfalls des Videokonferenzsystems handelt es sich bei dem Benutzer B2 um einen "normalen" Teilnehmer, beispielsweise einen/eine Auszubildende/n, der/die einem Vortrag des Präsentators B1 folgen möchte. Benutzer B3 ist in diesem Fall ein beliebiger weiterer Zuhörer. Auf die genannte Rollenverteilung kommt es jedoch im Rahmen der vorliegenden Erfindung nicht weiter an.

Bei den weiteren Benutzern oder Teilnehmern Bn kann es sich insbesondere um weitere "normale" Teilnehmer entsprechend Teilnehmer B2 oder um weitere Vortragende entsprechend Teilnehmer B1 handeln. Auch hierbei handelt es sich um keine Einschränkung der vorliegenden Erfindung.

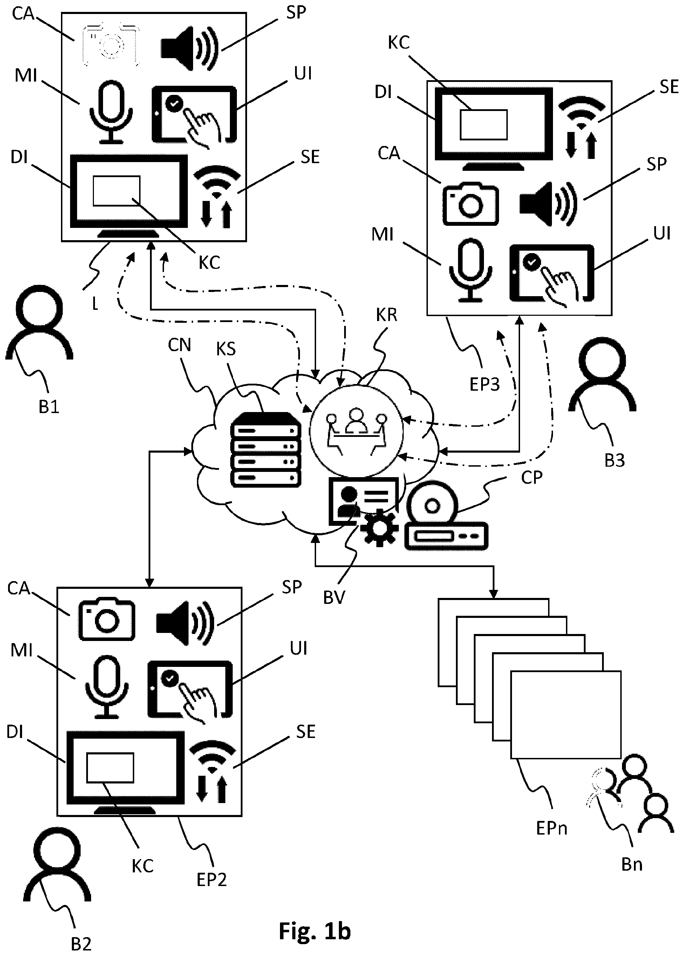

In Figur 1b ist gezeigt, wie das Videokonferenzsystem gemäß Figur 1a vorteilhafterweise verwendet werden kann. Auf diese Weise resultiert ein besonderes Verfahren zum Übertragen von Informationen, hier insbesondere der erwähnten Audio- und Videoströme, mittels Streaming-Technologie über Kommunikationskanäle, welche Kommunikationskanäle zwischen den dargestellten Endpunkten EP1 bis EP3 ausgebildet sind.

Gemäß der Darstellung in Figur 1b haben sich der Benutzer B1 und der Benutzer B3 in den dauerhaft bereitgestellten Konferenzraum KR eingewählt. Sie können sich nun gegenseitig hören und sehen, weil ihre Audio- und Videoströme entsprechend verknüpft sind, wie durch die strichpunktierten Pfeile in Figur 1b symbolisiert ist. Dies geschieht entsprechend nach Maßgabe durch den Konferenz-Server KS. Der Benutzer B2 nimmt gemäß Figur 1b derzeit noch nicht an der Besprechung teil, könnte sich jedoch selbst auch zu einem späteren Zeitpunkt noch in den Konferenzraum KR einwählen, um an der Besprechung mit den Benutzern B1 und B3 teilzunehmen. Gleiches gilt - entsprechende Zugangsberechtigungen vorausgesetzt - auch für die weiteren Benutzer Bn.

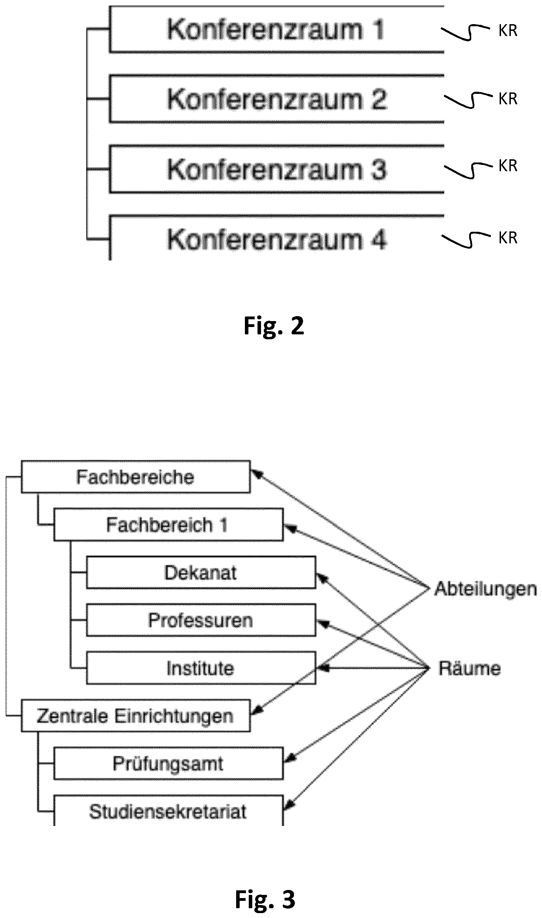

Die Erfindung ist - wie schon erwähnt wurde - keinesfalls darauf beschränkt, dass auf dem Konferenz-Server KS nur ein einziger Konferenzraum KR dauerhaft definiert ist. Je nach Anforderung durch einen Kunden kann die Gestaltung der Raumstruktur innerhalb eines zugehörigen Kundenkontos, d. h. einer Nutzungsmöglichkeit des Videokonferenzsystems durch den betreffenden Kunden (ein Unternehmen, eine Organisation, eine Gruppe von Privatpersonen, ...) unterschiedlich aussehen. Ein kleines Unternehmen benötigt u. U. nur wenige Räume, die insbesondere linear untereinander aufgelistet werden können. Dies ist in Figur 2 schematisch dargestellt. Figur 2 zeigt eine Raumstruktur, die lediglich vier Räume umfasst, die jeweils als "Konferenzraum #" bezeichnet sind. Eine Universität als Beispiel für eine größere Organisation kann hingegen auf dem Konferenz-Server KS eine weit verzweigte (Raum-)Struktur anlegen, um z. B. Fachbereiche oder zentrale Einrichtungen abzubilden. Dies ist in Figur 3 exemplarisch dargestellt.

Die (Raum-)Struktur gemäß Figur 3 umfasst eine Reihe von sogenannten Abteilungen, hier die genannten Fachbereiche oder zentrale Einrichtungen, sowie eine Anzahl von Räumen entsprechend dem Konferenzraum KR in Figur 1a, 1b, die den Abteilungen strukturell untergeordnet sind und wiederum als dauerhaft eingerichtete Konferenzräume dienen.

Dabei ist zwischen Abteilungen und Räumen funktional zu unterscheiden, weil Abteilungen als reine ordnungsgebende Strukturelemente anzusehen sind, welche wiederum weitere Abteilungen und Räume (die eigentlichen Konferenzräume) enthalten können.

Vorteilhafterweise können sowohl Abteilungen als auch Räume einfach über eine webbasierte Administrationsoberfläche erstellt und z. B. per Drag & Drop in einer beliebigen Struktur angeordnet werden, was zeichnerisch nicht weiter dargestellt ist. Die Erfindung ist jedoch diesbezüglich keinesfalls beschränkt und umfasst auch andere Möglichkeiten zum Erstellen der gezeigten Strukturen. Dabei können Abteilungen und Räume gesammelt, d. h. gemeinsam oder jeweils einzeln konfiguriert werden, um Benutzern oder Gruppen von Benutzern entsprechende Zutrittsberechtigungen bzw. Berechtigungsstufen zuzuweisen, die dann entsprechend in der Benutzerverwaltung BV auf dem Konferenz-Server KS abgespeichert werden (vergleiche Figuren 1a und 1b).

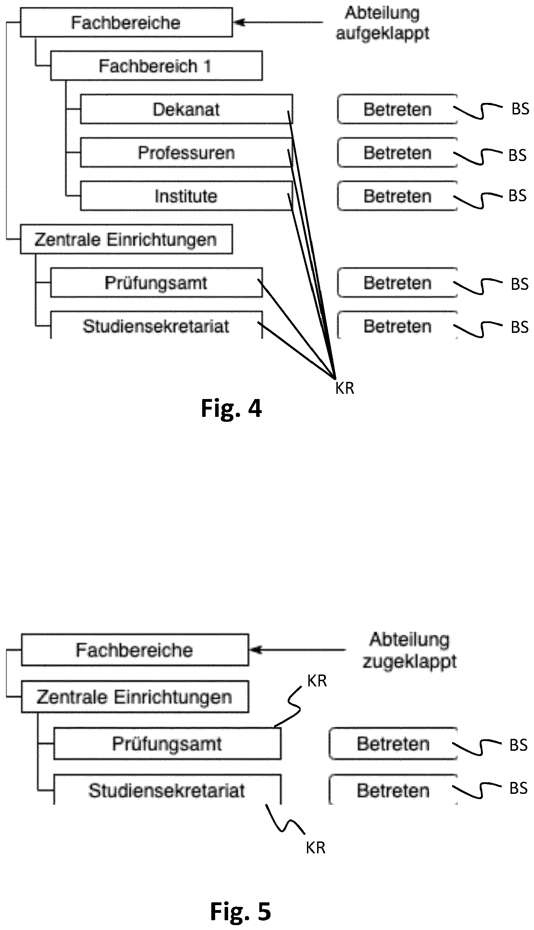

Insbesondere in den Figuren 4 und 5 sind exemplarische Darstellungen der Raumstruktur gezeigt, wie sie auf dem Konferenz-Server KS angemeldete Benutzer sehen, wenn sie die Darstellung der Raumstruktur innerhalb der Client-Software (Konferenz-Client KC, vergleiche Figur 1a und 1b) angezeigt bekommen. Abteilungen und deren jeweils untergeordnete Struktur können zur besseren Übersicht "aufgeklappt" oder "eingeklappt" werden, z. B. durch Anklicken. In Figur 4 ist beispielsweise die Abteilung "Fachbereiche" aufgeklappt dargestellt (wie angegeben), sodass die darunter angeordnete weitere Abteilung "Fachbereich 1" mit den zugehörigen Räumen "Dekanat", "Professoren" und "Institute" erkennbar sind, welche jeweils dem Konferenzraum KR in Figur 1a, 1b entsprechen. Gleiches gilt für die Abteilung "Zentrale Einrichtungen" mit den Räumen "Prüfungsamt" und "Studiensekretariat". Die genannten Räume können mittels der jeweils zugeordneten "Betreten"-Schaltfläche BS betreten werden, wenn der Benutzer eine entsprechende Auswahl vornimmt. Damit können sich die Benutzer intuitiv in der Raumstruktur bewegen, sofern die jeweilige Zugangsberechtigung vergeben wurde.

Beim Betreten eines Raumes werden Audio- und Videoströme aller sich darin aufhaltender Benutzer miteinander verbunden, sodass sich jeder hören und sehen kann. Hierauf wurde bereits vielfach hingewiesen. Beim Verlassen eines Raumes werden diese Audio- und Videoströme entsprechend wieder getrennt. Die Aufenthaltsdauer in einem Raum ist zeitlich unbegrenzt. Der Raum kann verlassen werden entweder durch Schließen der Anwendung (des Konferenz-Clients) oder durch Betreten eines anderen Raumes.

Gemäß Figur 5 wurde exemplarisch die Abteilung "Fachbereiche" zugeklappt, sodass sie für den Benutzer nicht mehr explizit dargestellt ist, um die Übersichtlichkeit der Darstellung zu erhöhen. Es kann vorgesehen sein, dass der Benutzer die betreffende Abteilung durch Anwählen des betreffenden Anzeigebereichs, beispielsweise per Mausklick, wieder aufklappen kann.

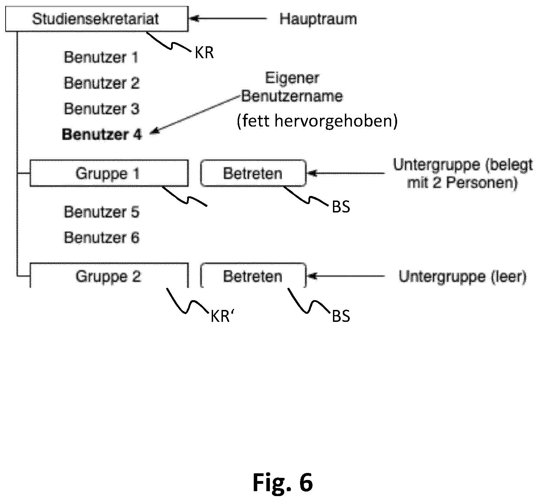

Es wurde bereits darauf hingewiesen, dass vorteilhafterweise Gruppen innerhalb eines Raumes definiert sein können, um die Nutzbarkeit des Videokonferenzsystems weiter zu verbessern. Jeder Raum besteht bei entsprechender Ausgestaltung aus einem Hauptraum KR und einer beliebigen Anzahl von sogenannten Gruppenräumen KR', wie dies in Figur 6 beispielhaft dargestellt ist. Gruppenräume KR' können zur weiteren Strukturierung verwendet werden oder auch, um adhoc Besprechungen in wechselnden Zusammensetzungen durchzuführen, ohne den eigentlichen Raum (den Hauptraum KR) zu verlassen.

Innerhalb der Client-Software (Konferenz-Client KC, vergleiche Figur 1a und 1b) wird der aktuelle Raum bzw. der Hauptraum KR mit seinen Untergruppen (Gruppenräumen) vorzugsweise übersichtlich in einer Liste dargestellt, wobei zusätzlich die Benutzer dargestellt sind, die sich momentan in einem betreffenden Raum (Hauptraum KR oder Gruppenraum KR') aufhalten.

Wie in Figur 6 gezeigt, stellt "Studiensekretariat" einen Hauptraum KR dar, in dem sich derzeit die Benutzer 1 bis 4 aufhalten. Dabei ist gemäß der Darstellung in Figur 6 der (eigene) Benutzername des betrachteten Benutzers, hier Benutzer 4, (fett) hervorgehoben. Der genannte Hauptraum KR verfügt über zwei Gruppenräume KR' ("Gruppe 1" und "Gruppe 2"), wobei sich nur in dem erstgenannten Gruppenraum KR' Benutzer aufhalten (Benutzer 5 und Benutzer 6). Die andere Untergruppe (Gruppenraum KR') ist leer. Neben den Gruppenräumen KR' finden sich wieder "Betreten"-Schaltflächen BS, über die man in den jeweiligen Gruppenraum KR gelangt, um dort an einer Videokonferenz teilzunehmen. Hauptraum und Gruppenräume entsprechend funktional dem Konferenzraum KR in Figur 1a, 1b. Beim Betreten des Hauptraums oder von Gruppenräumen werden Audio- und Videoströme aller sich darin aufhaltender Nutzer miteinander verbunden, sodass sich jeder hören und sehen kann. Beim Verlassen des jeweiligen Raumes werden diese Audio- und Videoströme entsprechend wieder getrennt, wie bereits mehrfach beschrieben.

## Patentansprüche

1. Videokonferenzsystem ausgebildet zum bidirektionalen Übertragen von Video- und Audiosignalen zwischen mehreren Endpunkt-Rechnern (EP1-EP3, EPn), die jeweils eine Sendeeinrichtung und/oder eine Empfangseinrichtung (SE) für Audioströme und/oder für Videoströme aufweisen, über ein Computernetz (CN), insbesondere das Internet oder ein Intranet, umfassend:
jeweils einen Konferenz-Client (KC), der auf dem betreffenden Endpunkt-Rechner (EP1-EP3) installiert und ausführbar ist;
wenigstens einen Konferenz-Server (KS), der dazu ausgebildet ist, die Audio-und/oder Videoströme von den Endpunkt-Rechnern (EP1-EP3, EPn) zu empfangen, zu verarbeiten und an die Endpunkt-Rechner (EP1-EP3, EPn) zurückzusenden;
bei dem der Konferenz-Server (KS) weiterhin dazu ausgebildet ist, für die Endpunkt-Rechner (EP1-EP3, EPn) und/oder einen zugehörigen Benutzer (B1-Bn) wenigstens einen dauerhaft verfügbaren virtuellen Raum (KR) zur Verfügung zu stellen, der für die Endpunkt-Rechner (EP1-EP3, EPn) und/oder einen zugehörigen Benutzer (B1-Bn) in Abhängigkeit von einer vorgegebenen Berechtigungseinstufung des Endpunkt-Rechners (EP1-EP3, EPn) und/oder des zugehörigen Benutzers (B1-Bn) zugänglich ist, wobei in dem Raum (KR) anwesende Endpunkt-Rechner (EP1, EP3) und/oder Benutzer (B1, B3) über den Konferenz-Server (KS) mit den anderen zeitgleich in dem Raum (KR) anwesenden Endpunkt-Rechner (EP1, EP3) und/oder Benutzer (B1, B3) in Verbindung stehen;
bei dem der jeweilige Konferenz-Client (KC) dazu ausgebildet ist, den wenigstens einen Raum (KR) anzuzeigen und dem Endpunkt-Rechner (EP1-EP3, EPn) und/oder Benutzer (B1-Bn) sein Betreten in Abhängigkeit von der Berechtigungseinstufung zu ermöglichen.

2. Videokonferenzsystem nach Anspruch 1, bei dem innerhalb eines Kundenkontos eine Mehrzahl von Räumen (KR) definierbar und vorzugsweise in einer mehrdimensionalen Raumstruktur anordenbar sind.

3. Videokonferenzsystem nach Anspruch 2, bei dem in Abhängigkeit von seiner Berechtigungseinstufung Teile der Raumstruktur für einen gegebenen Benutzer (B1-Bn) einsehbar oder verborgen sind.

4. Videokonferenzsystem nach Anspruch 2 oder 3, bei dem eine Gestaltung der Raumstruktur je nach Art des Kundenkontos unterschiedlich ist, insbesondere linear untereinander aufgelistet oder als verzweigte Struktur.

5. Videokonferenzsystem nach einem der Ansprüche 1 bis 4, bei dem neben Räumen (KR) noch Abteilungen definiert oder definierbar sind, welche Abteilungen Strukturelemente darstellen, welche wiederum weitere Abteilungen und/oder Räume (KR) enthalten können.

6. Videokonferenzsystem nach einem der Ansprüche 1 bis 5, bei dem Räume (KR) und/oder, bei Rückbezug auf Anspruch 5, Abteilungen über eine webbasierte Administrationsoberfläche erstellbar und vorzugsweise per Drag & Drop in einer beliebigen Struktur anordenbar sind.

7. Videokonferenzsystem nach einem der Ansprüche 1 bis 6, bei dem Räume und/oder, bei Rückbezug auf Anspruch 5, Abteilungen gesammelt oder einzeln konfigurierbar sind, um Benutzern (B1-Bn) oder Gruppen von Benutzern (B1-Bn) jeweils eine Zutrittsberechtigung und eine Berechtigungseinstufung zuzuweisen.

8. Videokonferenzsystem nach einem der Ansprüche 1 bis 7 bei Rückbezug auf Anspruch 2, bei dem der Konferenz-Client (KC) dazu ausgebildet ist, am Konferenz-Server (KS) angemeldeten Benutzern (B1-Bn) eine Darstellung der Raumstruktur anzuzeigen.

9. Videokonferenzsystem nach einem der Ansprüche 1 bis 8 bei Rückbezug auf Anspruch 5, bei dem Abteilungen und optional deren untergeordnete Raumstruktur/en gemäß Anspruch 2 in der Darstellung mittels des Konferenz-Clients (KC) ausblendbar sind.

10. Videokonferenzsystem nach einem der Ansprüche 1 bis 9, bei dem Räume (KR) mittels einer zugeordneten Bedien-Schaltfläche (BS) des Konferenz-Clients (KC) betretbar sind, sofern ein betreffender Benutzer (B1-Bn) über die jeweilige Berechtigungseinstufung für den Zugang verfügt.

11. Videokonferenzsystem nach einem der Ansprüche 1 bis 10, dazu ausgebildet, die Audio- und Videoströme aller betreffenden Benutzer (B1, B3) beim Betreten eines Raumes (KR) durch die Benutzer (B1, B3) miteinander zu verbinden und beim Verlassen des Raumes (KR) durch die Benutzer (B1, B3) wieder zu trennen, insbesondere auch sukzessive für einzelne Benutzer.

12. Videokonferenzsystem nach einem der Ansprüche 1 bis 11, bei dem eine Aufenthaltsdauer in einem Raum (KR) zeitlich unbegrenzt ist, wobei vorzugsweise das Verlassen eines Raumes (KR) durch Schließen des Konferenz-Clients (KC) oder durch Betreten eines anderen Raumes (KR) bewirkbar ist.

13. Videokonferenzsystem nach einem der Ansprüche 1 bis 12, dazu ausgebildet, dass sich ein Benutzer (B1-B3, Bn), vorzugsweise unter Verwendung nur eines zugehörigen Benutzerkontos, in mehreren Räumen (KR) gleichzeitig aufhalten kann.

14. Videokonferenzsystem nach einem der Ansprüche 1 bis 13, bei dem wenigstens ein Raum einen Hauptraum (KR) und eine beliebigen Anzahl von Gruppenräumen (KR') umfasst, welche Gruppenräume (KR') vorzugsweise zur weiteren Strukturierung und/oder zur Durchführung von adhoc-Konferenzen in wechselnden Zusammensetzungen verwendbar sind, ohne dabei den übergeordneten Hauptraum (KR) zu verlassen.

15. Videokonferenzsystem nach einem der Ansprüche 1 bis 14, bei dem der Konferenz-Client dazu ausgebildet ist, einen aktuelle Raum oder den Hauptraum (KR) gemäß Anspruch 14 mit den Gruppenräumen (KR') in einer Liste darzustellen, vorzugsweise zusammen mit der Bedien-Schaltfläche (BS) gemäß Anspruch 10, wobei höchst vorzugsweise zusätzlich diejenigen Benutzer (B1-Bn) und/oder eine Anzahl derjenigen Benutzer (B1-Bn) darstellbar sind, die sich aktuell in einem bestimmten Hauptraum (KR) oder Gruppenraum (KR') aufhalten.

16. Videokonferenzsystem nach einem der Ansprüche 1 bis 15, mit einer zusätzlichen Textnachrichten-Funktion zum Erzeugen von Textnachrichten, welche Textnachrichten an die gesamte Raumstruktur gemäß Anspruch 2 und die sich darin aufhaltenden Benutzer verteilbar sind, wobei vorzugsweise auch nur Teile der Raumstruktur, wenigstens ein Raum (KR), wenigstens ein Gruppenraum (KR') und/oder wenigstens ein einzelner Benutzer (B1-Bn) als Empfänger einer solchen Textnachricht festlegbar ist/sind.

17. Computerprogrammprodukt (CP) mit auf einem physikalischen Datenträger gespeicherten oder speicherbaren Programminformationen, bei deren Ausführung auf einem Computersystem mit einer Anzahl von über Kommunikationskanäle verbundenen oder verbindbaren Endpunkten (EP1-EP3, EPn), die jeweils eine Sendeeinrichtung (SE) und/oder eine Empfangseinrichtung (SE) für Audioströme und/oder für Videoströme aufweisen, ein Videokonferenzsystem zum bidirektionalen Übertragen von Video- und Audiosignalen gemäß einem der Ansprüche 1 bis 16 ausgebildet oder ausbildbar ist.
